# EUROPEAN PATENT APPLICATION

(11) **EP 2 434 384 A2**
(43) Date of publication of application: **28.03.2012**
(21) Application number: 11158448.8
(22) Date of filing: 16.03.2011
(51) Int. Cl.: G06F 3/048

(54) **Interface for application management in an electronic device**

(30) Priority: 27.09.2010 US 386739 P
(71) Applicant: Research in Motion Corporation, Wilmington DE 19801 (US)
(72) Inventor: Lindsay, Donald, James, Waterloo Ontario N2L 3W8 (CA); Yun, Wesley, Jae, Keun, San Jose, CA 95124-2215 (US)
(74) Representative: MERH-IP Matias Erny Reichl Hoffmann

(57) **Abstract**

The present specification relates to providing an application management interface on an electronic device. An implementation contemplates controlling a display to generate at least one installed application identifier in conjunction with at least one active application identifiers which can be selected for invocation or a corresponding application.

## Description

The present specification relates generally to computing devices and more specifically relates to interfaces for application management in electronic devices.

### BACKGROUND

Electronic devices continue apace to provide greater functionality. Some non-limiting examples are helpful. In terms of applications, email, calendaring, contact management are ubiquitous on mobile electronic devices, and a large number of enhanced applications beyond these core applications are also being offered.

### SUMMARY

An aspect of this specification provides a method for controlling a display of an electronic device to provide an application management interface comprising: receiving a set of installed application identifiers corresponding to all applications installed on an the electronic device; controlling the display to generate at least one a portion of the set of installed application identifiers; receiving a set of active application identifiers corresponding to all active applications currently executing on a processor of the electronic device; controlling the display to generate at least one a portion of the set of active application identifiers in conjunction with the at least one a portion of the set of installed application identifiers; and in response to an input, invoking an application corresponding to one of the installed application identifiers or one of the active application identifiers.

The method can further comprise: receiving navigation input; and controlling the display to navigate the at least one of the installed application identifiers or the at least one of the active application identifiers according to the navigation input.

The navigation input can comprise input representative of a selection of an affordance. The navigation input can comprise input representative of a swipe gesture.

Each of the active application identifiers can comprise a task window.

The task window can comprise a view that can be dynamically updated to display a current activity within an application corresponding to the task window.

The at least one of the installed application identifiers and the at least one of the active application identifiers can be displayed in an application window.

The at least one of the installed application identifiers can be displayed in a first application window and the at least one of the active application identifiers can be displayed in a second application window.

The first application window can comprise a sorting interface for sorting the at least one of the installed application identifiers into subsets.

The subsets can include at least one of (All, Games, Media, Social, and Favourites).

The method can further comprise: receiving an input representative of a command to close a first active application; and removing, from the second window, an active application identifier corresponding to the first active application.

The at least one of the installed application identifiers and the at least one of the active application identifiers can be generated in a carousel mode.

Each of the installed application identifiers comprises one of (icons and text names).

Another aspect of this specification provides an electronic device comprising: a display; and a processor configured to: receive installed application identifiers corresponding to all applications installed on the electronic device; control the display to generate at least one of the installed application identifiers; receive active application identifiers corresponding to all active applications; control the display to generate at least one of the active application identifiers in conjunction with the at least one of the installed application identifiers; and in response to an input, invoke an application corresponding to one of the installed application identifiers or one of the active application identifiers.

The processor can be further configured to: receive navigation input; and control the display to navigate the at least one of the installed application identifiers or the at least one of the active application identifiers according to the navigation input.

Another aspect of this specification provides a computer program product, for a portable electronic device comprising a processor and a display, the computer program product comprising a non-transitory computer-readable storage medium having a computer-readable program code adapted to be executedable on the processor to implement a method of controlling the display to provide an application management interface, the method comprising: receiving installed application identifiers corresponding to all applications installed on the electronic device; controlling the display to generate at least one of the installed application identifiers; receiving active application identifiers corresponding to all active applications; controlling the display to generate at least one of the active application identifiers in conjunction with the at least one of the installed application identifiers; and in response to an input, invoking an application corresponding to one of the installed application identifiers or one of the active application identifiers.

### BRIEF DESCRIPTION OF THE DRAWINGS

Figure 1 is a schematic representation of a front view of a portable electronic device according to a non-limiting embodiment.

Figure 2 is a schematic representation of a rear view of a portable electronic device according to a non-limiting embodiment.

Figure 3 is a block diagram of the electronic components of the device shown in Figures 1 and 2 according to a non-limiting embodiment.

Figure 4 shows a variation on the device of Figure 1.

Figure 5 shows the block diagram of Figure 3 with examples of installed applications and active applications.

Figure 6 shows the processor of Figure 3 controlling the display of Figure 3 to generate an example screen of the menu application of Figure 5.

Figure 7 shows a flowchart for controlling a display to provide a management interface for managing installed and active applications.

Figure 8 shows a variation on the example screen of Figure 6.

### DETAILED DESCRIPTION OF THE EMBODIMENTS

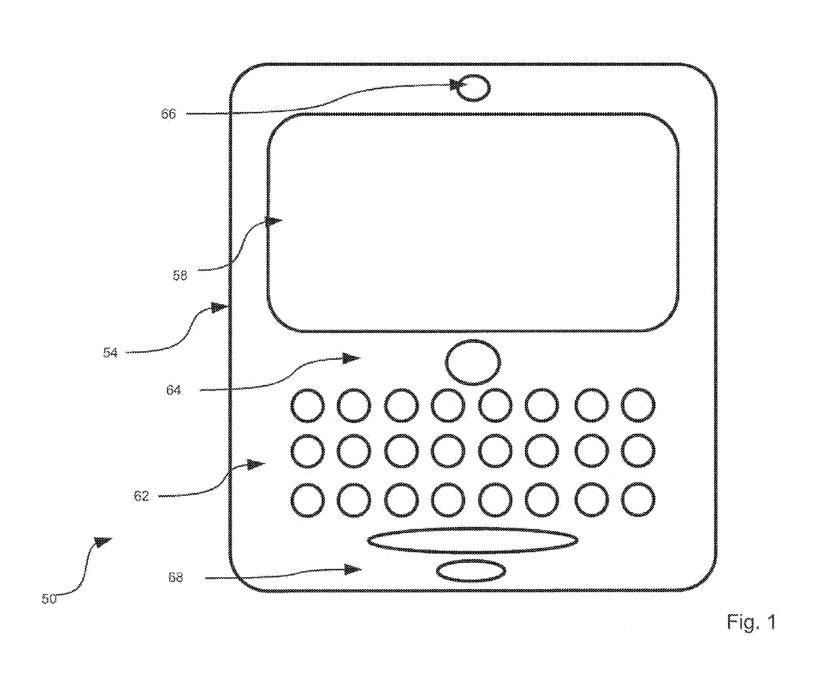

Referring now to Figure 1, shows a schematic representation of a non-limiting example of a portable electronic device 50 which is configured for device setting management via a plurality of interfaces, as discussed in greater detail below. It is to be understood that portable electronic device 50 is purely exemplary, and it will be apparent to those skilled in the art that a variety of different portable electronic device structures are contemplated. Indeed variations on portable electronic device 50 can include, without limitation, a cellular telephone, a portable email paging device, a camera, a portable music player, a portable video player, a portable video game player, a laptop computer, or a netbook computer. Other contemplated variations include devices which are not necessarily portable, such as desktop computers.

Referring to Figure 1, device 50 comprises a chassis 54 that supports a display 58. Display 58 can comprise one or more light emitters such as an array of light emitting diodes (LED), liquid crystals, plasma cells, or organic light emitting diodes (OLED). Other types of light emitters are contemplated. Chassis 54 also supports a keyboard 62. It is to be understood that this specification is not limited to any particular structure, spacing, pitch or shape of keyboard 62, and the depiction in Figure 1 is purely exemplary. For example, full or reduced "QWERTY" keyboards are contemplated. Other types of keyboards are contemplated. Device 50 also comprises a pointing device 64 which can be implemented as a touch-pad, joystick, trackball, track-wheel, or as a touch sensitive membrane on display 58. Device 50 also comprises a speaker 66 for generating audio output, and a microphone 68 for receiving audio input.

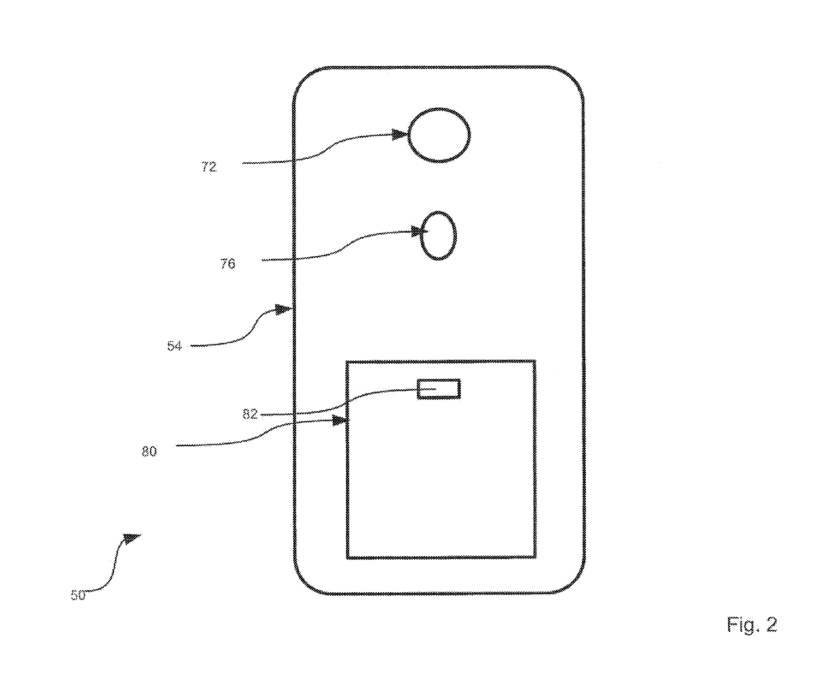

Referring to Figure 2, a rear view of device 50 is shown. In Figure 2, device 50 is also shown as comprising a flash 72 and an optical capture unit 76. Flash 72 can activate to provide additional lighting to assist the capture of energy by optical capture 76. A battery compartment cover 80 is also shown in Figure 2, with a tab 82 that can be manipulated to unlock cover 80 from chassis 54 and so that cover 80 can be detached from chassis 54.

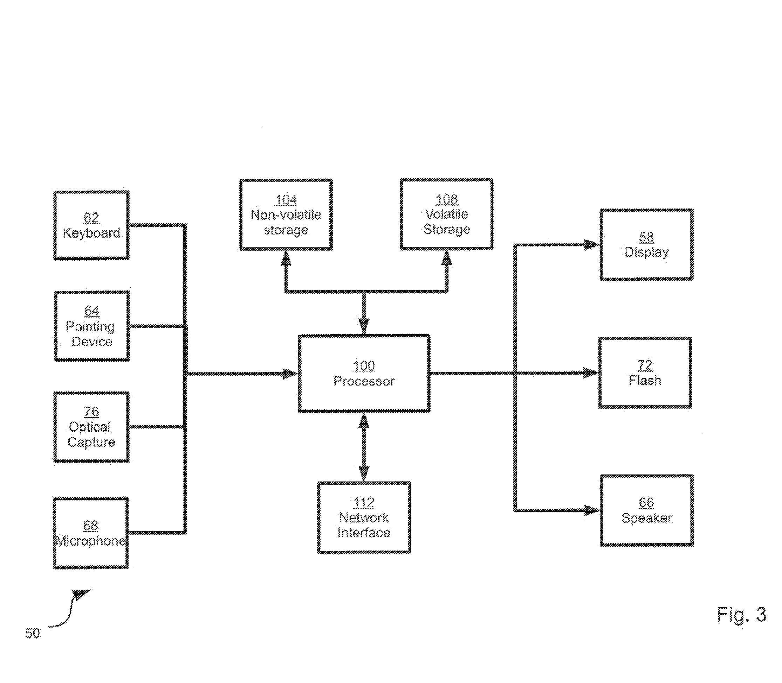

Figure 3 shows a schematic block diagram of the electronic components of device 50. It should be emphasized that the structure in Figure 3 is purely exemplary. Device 50 includes a plurality of input devices which in a present embodiment includes keyboard 62, pointing device 64, and microphone 68, in addition to optical capture unit 76. Other input devices are contemplated. Input from keyboard 62, pointing device 64 and microphone 68 and optical capture unit 76 is received at a processor 100. Processor 100 can be configured to execute different programming instructions that can be responsive to the input received via input devices. To fulfill its programming functions, processor 100 is also configured to communicate with a non-volatile storage unit 104 (e.g. Erase Electronic Programmable Read Only Memory ("EEPROM"), Flash Memory) and a volatile storage unit 108 (e.g. random access memory ("RAM")). Programming instructions that implement the functional teachings of device 50 as described herein are typically maintained, persistently, in non-volatile storage unit 104 and used by processor 100 which makes appropriate utilization of volatile storage 108 during the execution of such programming instructions.

Processor 100 in turn is also configured to control display 58, speaker 66 and flash 72, also in accordance with different programming instructions and optionally responsive to different input receive from the input devices.

Processor 100 also connects to a network interface 112, which can be implemented in a present embodiment as a radio configured to communicate over a wireless link, although in variants device 50 can also include a network interface for communicating over a wired link. Network interface 112 can thus be generalized as a further input/output device that can be utilized by processor 100 to fulfill various programming instructions. It will be understood that interface 112 is configured to correspond with the network architecture that defines such a link. Present, commonly employed network architectures for such a link include, but are not limited to, Global System for Mobile communication ("GSM"), General Packet Relay Service ("GPRS"), Enhanced Data Rates for GSM Evolution ("EDGE"), 3G, High Speed Packet Access ("HSPA"), Code Division Multiple Access ("CDMA"), Evolution-Data Optimized ("EVDO"), Institute of Electrical and Electronic Engineers (IEEE) standard 802.11 (Wifi), Bluetooth™ or any of their variants or successors. It is also contemplated each network interface 112 can include multiple radios to accommodate the different protocols that may be used to implement different types of links. In the specific, non-limiting example, interface 112 is configured to provide 3G, Wifi and Bluetooth™ links.

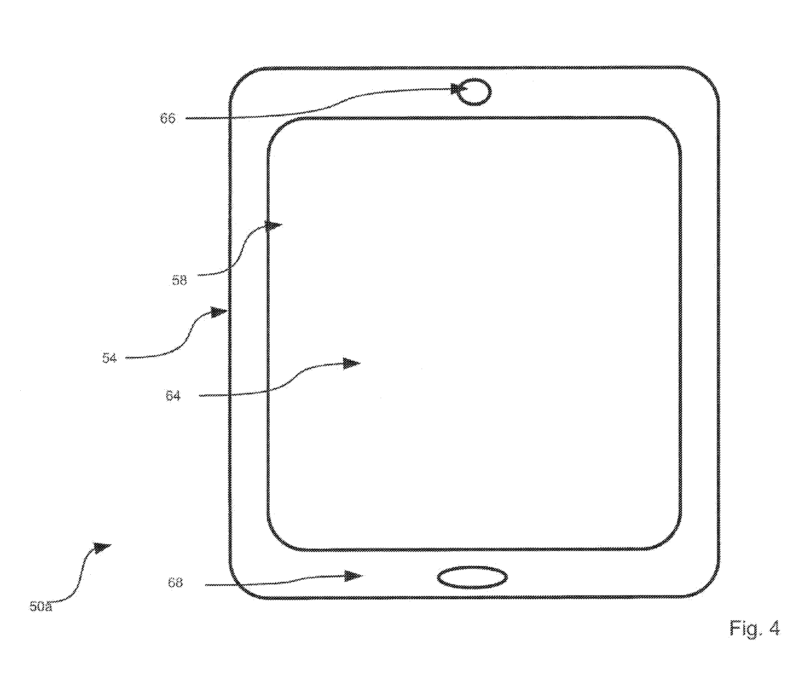

As will become apparent further below, device 50 can be implemented with different configurations than described, omitting certain input devices or including extra input devices, and likewise omitting certain output devices or including extra input devices. For example, Figure 4 shows a variation on the device 50, in the form of device 50a. Device 50a omits keyboard 62 in place of a larger display 58, although device 50a may also be provided with a slide-out keyboard. Further, in device 50a, pointing device 64 is implemented as a touch screen. The actual physical dimensions of device 50a can also vary. For example, device 50a can be implemented in the form factor of a mobile telephone, or in the form factor of a tablet computer.

Hereafter, further discussion relates to device 50a, but those skilled in the art will recognize that with appropriate modifications such discussion can also relate to device 50, or other variants of device 50a.

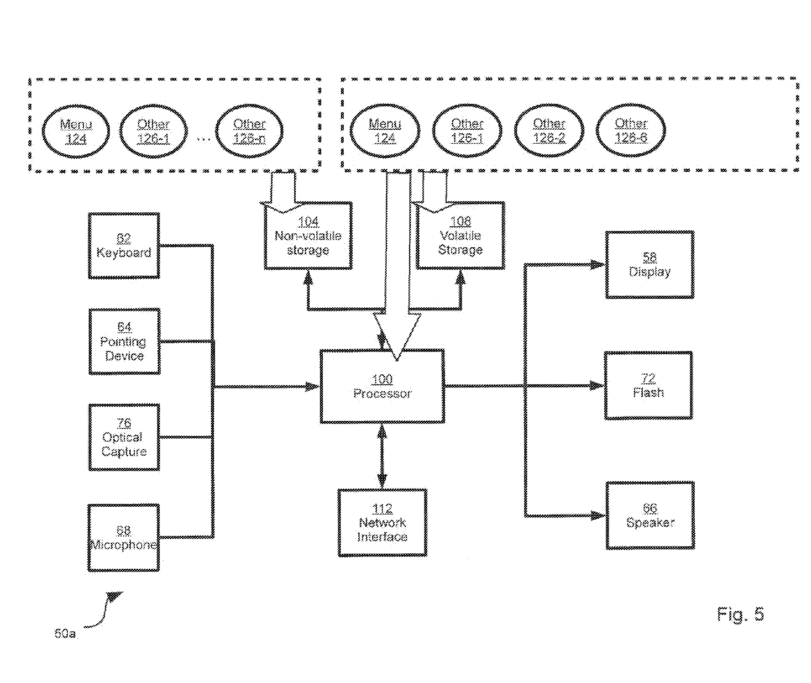

Referring to Figure 5, device 50a is configured to maintain, within non-volatile storage 104, a menu application 124, and a plurality of other applications 126-1 ... 126-n. (Hereafter, generically referred to as other application 126 and collectively referred to as other applications 126). Menu application 124 can be any application that generates a plurality of icons or other selectable *indicia* corresponding to the plurality of other applications 126. Other applications 126 can include, by way of non-limiting example, an email application, a calendar application, a contact manager application, games, social network application, media applications, and web browsers. Other applications will now occur to those skilled in the art. Such other applications 126 may also be logically grouped into different views, as discussed further below.

Furthermore, device 50a is also configured to execute, using processor 100 and volatile storage 108, to execute menu application 124 and various ones of the other applications 126, as those other applications 126 are invoked for execution.

A non-limiting example of an interface for managing the various installed and executing applications is shown in Figure 5, where processor 100 is shown as controlling display 58 to generate a status bar 120 and a menu application 124. In Figure 5, status bar 120, as generated, comprises the icons representing a current state of a specific set of functions, including: a Bluetooth status indicator, a Wifi status indicator, a core network status indicator, an alarm clock status indicator, a time indicator, and a battery-level indicator.

Menu application 124 comprises an installed application window 130 and an active application window 134. While window 130 and window 134 are shown as being framed, such framing is not necessary, and, if desired at all, other types of indications can be provided in order to distinguish window 130 from window 134, such as the use of shading or labels or combinations thereof.

In general terms, installed application window 130 provides a navigable interface of icons 126(i) for all other applications 126 that are installed on device 50a and therefore stored in non-volatile storage 104. Hereafter, the following nomenclature is used for icons 126(i): icon 126-1(i) is an icon corresponding to application 126-1; icon 126-2(i) is an icon corresponding to application 126-2; etc. Generically, an icon is referred to as icon 126(i), while collectively, icons are referred to as icons 126(i). Also hereafter, the term "installed applications" is to be understood to refer to applications 126 that are stored within non-volatile storage 104, irrespective of whether those applications 126 are actually executing on processor 100 or present within volatile storage 108. The icons for other applications 126 shown in installed application window 130 may be invoked from installed application window 130 for execution on processor 100.

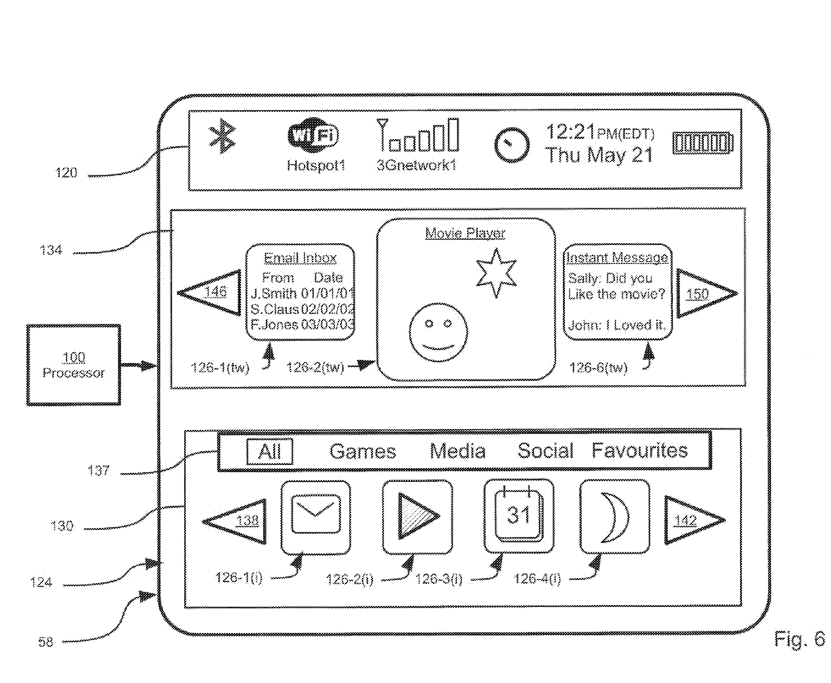

Installed application window 130 also comprises a sorting interface 137 which can be used to select whether the entire set, or only certain grouped subsets, of icons 126(i) for installed other applications 126 will be displayed within installed application window 130. The sorting interface 137 (which is not required) shown in Figure 6, provides, as examples, an "All" sorting which corresponds to the entire set of icons 126(i) for installed applications 126 and a "Games" sorting which corresponds to a sub-set of the installed applications 126 designated as games. Other sub-set groupings that are contemplated by sorting interface 137 comprise "Media", "Social" and "Favourites", but it is to be understood that these are non-limiting examples. In the example of Figure 5, the "All" sorting has been selected meaning that the entire set of installed applications 126 are available for viewing within the installed application window 130.

Installed application window 130 also comprises a left-navigation affordance 138 and a right-navigation affordance 142 which may be selected to view, (in a carousel or non-carousel or other mode, as per configuration of device 50a), other icons 126(i) corresponding to installed applications 126 that are not presently within the view shown within installed applications window 130. In variations left-navigation affordance 138 and right-navigation affordance 142 can be eliminated, or supplemented, by configuring a touch screen version of pointing device 64 to respond to left or right "swipe" gestures. Other navigation interfaces will now occur to those skilled in the art.

Using pointing device 64 (or keyboard 62, if provided), other applications 126 can be activated from installed application window 130 by selecting any portion of display 58 that is bounded by the area of installed application window 130. For example, where pointing device 64 is a set of touch screen transducers overlaid on display 58, then depressing an area of display 58 that is bounded by the area of an icon, via a stylus or via a finger, will invoke a selected application 126 within installed application window 130. As another example, where pointing device 64 is a trackball or a touchpad, then pointing device 64 can be manipulated to move a cursor (or otherwise change the focus of a pointer on display 58) to select any portion of display 58 that is bounded by the area of installed application window 130, in order to invoke a selected application 126 within installed application window 130.

In general terms, active application window 134 provides a navigable interface of task windows 126(tw) for all other applications 126 that are currently executing on processor 100 of device 50a. Hereafter, the following nomenclature is used for task windows 126(tw): task window 126-1 (tw) is a task window corresponding to application 126-1; task window 126-2(tw) is an icon corresponding to application 126-2(tw); etc. Generically, an individual task window is referred to as task window 126(tw), and collectively as task windows 126(tw). Also hereafter, the term "active applications" is to be understood to refer to applications 126 that are installed on device 50a and stored within non-volatile storage 104, but are also actually executing on processor 100. The task windows 126(tw) for other applications 126 shown in active application window 130 may be maximized so as to fully occupy the area of display 58, thereby closing menu application 124 or placing menu application 124 as a background application that is still active on processor 100 but not visible on display 58.

Active application window 134 also comprises a left-navigation affordance 146 and a right-navigation affordance 150 which may be selected to view, (in a carousel or non-carousel or other mode, as per configuration of device 50a), task windows 126(tw) corresponding to active applications 126 that are not presently within the view shown within active applications window 134. In variations left-navigation affordance 146 and right-navigation affordance 150 can be eliminated, or supplemented, by configuring a touch screen version of pointing device 64 to respond to left or right "swipe" gestures. Other navigation interfaces will now occur to those skilled in the art.

In a present implementation, each task window 126(tw) shows within that task window 126(tw) current activity within the corresponding application 126. For example, task window 126-1(tw) corresponds to the inbox of an email application 126-1 that is currently executing on processor 100. Accordingly, task window 126-1(tw) shows the current state of the inbox of email application 126-1. As new emails are received, the view within task window 126-1 (tw) is dynamically updated to show the new emails. As another example, task window 126-2(tw) corresponds to a movie player application 126-2 that is currently playing a particular video file. The video file will continue to play (i.e. frames will advance) within task window 126-2(tw) as part of the normal execution of movie player application 126-2. As another example, task window 126-6(tw) corresponds to an instant messaging application 126-6 that is currently showing a particular active instant message conversation. As participants in the conversation continue to dialogue, the dialogue updates will continue to appear within task window 126-6(tw) as part of the normal execution of instant message application 126-6.

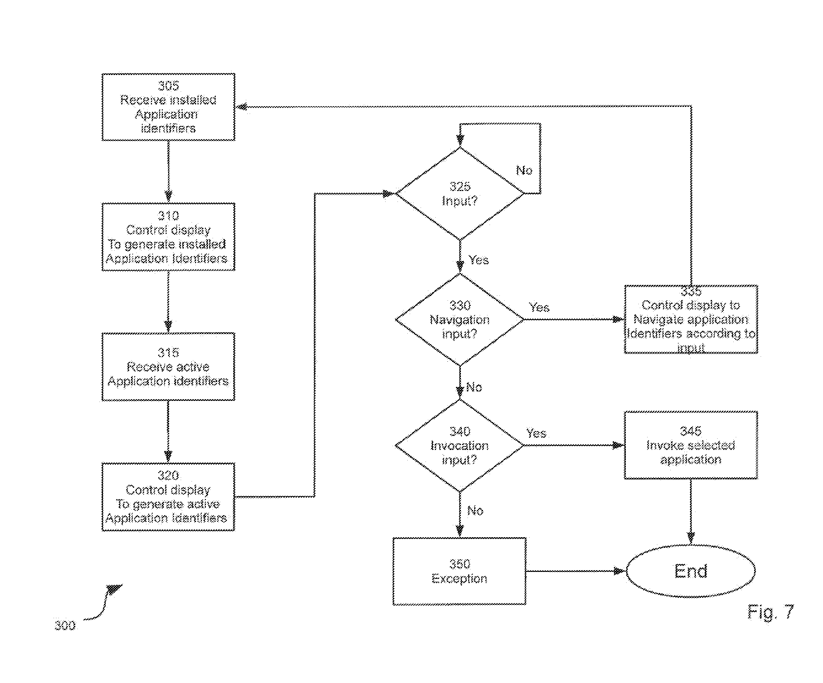

Referring now to Figure 7, a method for controlling a display to provide an application management interface is represented in the form of a flow-chart and indicated generally at 700. Method 700 can be implemented on as menu application 124 on device 50 or device 50a or variants thereon. Furthermore, method 700 can be used to control display 58 in accordance with the example view of Figure 6, as discussed above. However, it is to be understood that other layouts for display 58 are certainly contemplated.

Block 305 comprises receiving installed application identifiers. The form of installed application identifiers is not particularly limited. However, installed application identifiers can be in the form of icons, or text names for applications, or combinations thereof. Other forms of installed application identifiers will occur to those skilled in the art. The installed application identifiers will correspond to all applications currently installed in device 50a as stored within non-volatile storage 104. In the example of Figure 6, the installed application identifiers are in the form of icons 126(i).

Block 310 comprises controlling the display to generate the installed application identifiers received at block 305. In the example of Figure 6, processor 100 is configured to control display 58 to generate installed application window 130 as discussed above.

Block 315 comprises receiving active application identifiers. The form of active application identifier is not particularly limited. However, application identifiers can be in the form of task windows, or icons, or text names for applications, or combinations thereof. Other forms of installed application identifiers will occur to those skilled in the art. The active application identifiers will correspond to all applications currently active on device 50a as executing on processor 100. In the example of Figure 6, the active application identifiers are in the form of task windows 126(tw).

Block 320 comprises controlling the display to generate the active application identifiers received at block 315. In the example of Figure 6, processor 100 is configured to control display 58 to generate active application window 134 as discussed above.

Block 325 is a wait block to determine if any input is received. Again, depending on the types of input devices available on configuration of device 50a, input may be received by any available input device, such as pointing device 64 or keyboard 62 if present.

Block 330 comprises determining if navigation input has been received. A "yes" determination leads to block 335. In the example of Figure 6, navigation input may comprise a selection of one of affordances 138, 142, 146 or 150. Where swipe gestures are accepted, then a "yes" determination may be made when such a swipe gesture is received.

Block 335 comprises controlling the display to navigate application identifiers according to the received navigation input. In the example of Figure 6, either the installed application icons 126(i) or the active application task windows 126(tw) are changed in logical response to the navigation input.

A "no" determination at block 330 leads to block 340. Block 340 comprises determining if an invocation input has been received. An invocation input generally corresponds to any received instruction at processor 100 indicating that a particular application 126 corresponding to a particular installed application identifier (e.g. an icon 126(i)) is to be executed on processor 100, or that a particular application 126 corresponding to a particular active application identifier (e.g. a task window 126(tw)) is to be maximized or restored to full viewing on display 58. Such an invocation input may comprise, for example, a prolonged depression of an area of display 58 that matches a particular icon 126(i) or a particular task window 126(tw). Other gestures for providing an invocation input will occur to those skilled in the art, such as a "double tap" of an area of display 58 that matches a particular icon 126(i) or a particular task window 126(tw). As another example, where a keyboard 62 is provided, then the depression of the "enter" key (or other designated key) could correspond to an instruction to maximize the center-most task window 126(tw), which in the example of Figure 6 would correspond to task window 126-2(tw). Other examples of invocation inputs will occur to those skilled in the art.

Block 345 comprises invoking the selected application in accordance with the instruction received at block 340.

Block 350 is an exception block, to handle any types of input, or other events, that are not otherwise contemplated at block 330 or block 340. For example, while not shown in method 300, for ease of illustration, it is also contemplated that an input can be received which closes an active application so that it is no longer executing and is therefore removed from active application window 134. Thus, block 350 can be modified to accommodate closure of an active application 126 directly from within menu application 124. Likewise, block 350 can be modified so that an inactive application 126 can also be selected directly for deletion or uninstallation from installed application window 130.

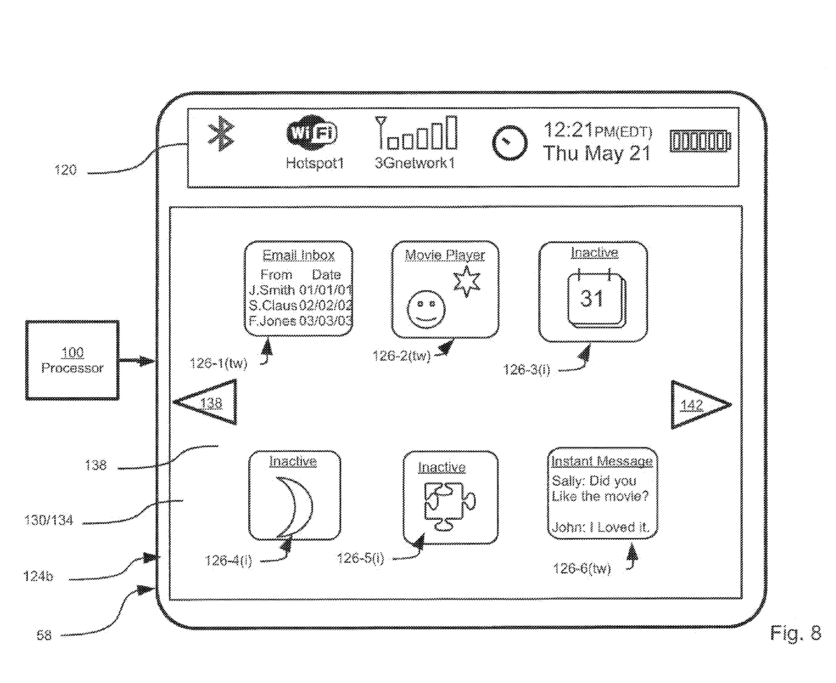

To further emphasize the fact that different views for menu application 124 are contemplated, Figure 8 shows an alternative menu application 124b with an example view on display 58. In the view in Figure 8, inactive application window 130 and active application window 134 are merged into a single view. Active applications are shown with task windows 126(tw), whereas inactive applications are shown with icons 126(tw), with a further indicator that the particular application is inactive and therefore not currently executing. Affordance 138 and affordance 142 are offered for navigation. The view in Figure 8 can further help preserve precious display area.

Various advantages will now be apparent. Of note is that combined generation of views of active applications 126 with inactive applications 126 reduces the processing burden of constantly switching and hunting between views that show each application 126. Applications 126 which are executing can be seen, and more readily closed, in the event they are not required for execution. On devices with reduced processing, memory, display, and power resources, the careful management of active applications can drastically improve performance of such devices.

While the foregoing provides certain non-limiting exemplary embodiments, it should be understood that combinations, subsets, and variations of the foregoing are contemplated. For example, where installed application window 130 or active application window 134 may be laid out in other formats, including a grid format, where the area of display 58 accommodates.

## Claims

1. A method for controlling a display of an electronic device to provide an application management interface comprising:
receiving installed application identifiers corresponding to all applications installed on the electronic device;
controlling the display to generate at least one of the installed application identifiers;
receiving active application identifiers corresponding to all active applications;
controlling the display to generate at least one of the active application identifiers in conjunction with the at least one of the installed application identifiers; and
in response to an input, invoking an application corresponding to one of the installed application identifiers or one of the active application identifiers.

2. The method of claim 1, further comprising:
receiving navigation input; and
controlling the display to navigate the at least one of the installed application identifiers or the at least one of the active application identifiers according to the navigation input.

3. The method of claim 2, wherein the navigation input comprises input representative of a selection of an affordance.

4. The method of claim 2, wherein the navigation input comprises input representative of a swipe gesture.

5. The method of any one of claims 1 to 4, wherein each of the active application identifiers comprises a task window.

6. The method of claim 5, wherein the task window comprises a view that is dynamically updated to display a current activity within an application corresponding to the task window.

7. The method of any one of claims 1 to 6, wherein the at least one of the installed application identifiers and the at least one of the active application identifiers are displayed in an application window.

8. The method of any one of claims 1 to 6, wherein the at least one of the installed application identifiers is displayed in a first application window and the at least one of the active application identifiers is displayed in a second application window.

9. The method of claim 8, wherein the first application window comprises a sorting interface for sorting the at least one of the installed application identifiers into subsets.

10. The method of claim 9, wherein the subsets include at least one of (All, Games, Media, Social, and Favourites).

11. The method of any one of claims 8 to 10, further comprising:
receiving an input representative of a command to close a first active application; and
removing, from the second window, an active application identifier corresponding to the first active application.

12. The method of any one of claims 1 to 11, wherein the at least one of the installed application identifiers and the at least one of the active application identifiers are generated in a carousel mode.

13. The method of any one of claims 1 to 12, wherein each of the installed application identifiers comprises one of (icons and text names).

14. An electronic device comprising a display and a processor:
a display; and
a processor configured to implement the steps of the method of claims 1 to 13.

15. A computer program product, for a portable electronic device comprising a processor and a display, the computer program product comprising a non-transitory computer-readable storage medium having a computer-readable program code adapted to be executedable on the processor to implement a method of controlling the display to provide an application management interface, the method comprising steps of claims 1 to 13.
